# EUROPÄISCHE PATENTANMELDUNG

(11) **EP 1 024 076 A2**
(43) Veröffentlichungstag der Anmeldung: **02.08.2000**
(21) Anmeldenummer: 00100704.6
(22) Anmeldetag: 14.01.2000
(51) Int. Cl.: B62D 55/12

(54) **Fahrantrieb für militärische Kettenfahrzeuge**

(30) Priorität: 29.01.1999 DE 19903407
(71) Anmelder: MaK System Gesellschaft mbH, 24159 Kiel (DE)
(72) Erfinder: Kühl, Klaus, 24159 Kiel (DE)
(74) Vertreter: Hansmann, Dierk, Dipl.-Ing.

(57) **Zusammenfassung**

Zur Ausbildung eines Fahrantriebes mit einem elektrischen Antrieb für Kettenfahrzeuge ist vorgesehen, daß Antriebsräder (92) einer Antriebseinheit in einem oberen Kettentrumm der Gleiskette (3) ober- oder unterhalb eingreifen und dieses oberhalb der Stützrollen (7) bzw. mit Stützrollen (7) als Druckrollen unterhalb eingreifenden Antriebsrad erfolgt.

## Beschreibung

Die Erfindung bezieht sich auf einen Fahrantrieb für militärische Kettenfahrzeuge mit einem elektrischen Antrieb, wobei der Antrieb eines Kettenlaufwerks aus Gleiskette mit Laufrollen, Umlenkräder und durch mehrere elektrische Antriebsmotore mit zugehörigen Antriebsrädern gebildet ist.

Für den Antrieb von Gleisketten eines Kettenfahrzeuges mit elektrischen Antrieben sind verschiedene Anordnungen bereits bekannt. Ein elektrischer Antrieb zeichnet sich grundsätzlich dadurch aus, daß zwischen dem Antriebsmotor und einem angetriebenen Generator zur elektrischen Energieerzeugung, flexible Kabel für die Energieübertragung als Verbindung ausreichen, so daß eine Generatoreinheit einerseits und ein Antriebsmotor andererseits Einbaueinheiten darstellen, die an unterschiedlichen Einbauorten raumsparend in einem Fahrzeug angeordnet werden können. Bei einem mechanisch/hydraulischen Antrieb ist dieses im Gegensatz hierzu nicht möglich. Durch den elektrischen Antrieb werden deshalb Konzepte für ein Fahrzeug möglich, die die Anforderungen, wie optimale Besatzungsunterbringung, Panzerschutz, Sicht aus dem Fahrzeug, geschützter Ein- und Ausstieg für die Besatzung, erfüllen, da ein wahlfreier Einbau der Antriebskomponenten im Fahrzeug durchführbar ist. Weiterhin ist für die Zukunft absehbar, daß eine emissionsfreie elektrische Energieerzeugung mittels einer Brennstoffzelle erreichbar ist.

Gemäß der DE 195 37 945 A1 ist es bekannt, daß elektrische Antriebsmotore an den vorderen und hinteren Kettenumlenk- bzw. Antriebsrädern eingebaut werden, so daß die Antriebe innen ganz vorn oder ganz hinten bzw. auch außen im Kettentrumm liegen und keinen Platz im Innenraum des Fahrzeugs beanspruchen. Zusätzlich ist der angetriebene Generator im Fahrzeugheck seitlich so vorgenommen, daß ein Ausstieg am Generator vorbei heckseitig für die Besatzung frei bleibt.

Ferner ist aus der EU-A-0 825 411 bekannt, daß die Stromerzeugereinheiten am Heck des Fahrzeugs oberhalb des beidseitigen Kettentrumms links und rechts bzw. über die Fahrzeugbreite eingebaut sind. Hierdurch wird ein Durchgangsraum und eine Ausstiegsklappe für die Besatzung unter dem Stromerzeugereinbau realisiert.

Weiterhin ist nach der EU-A-0 825 410 eine ähnliche Anordnung von Energieerzeugerkomponenten links und rechts oberhalb der Kettentrumms bekannt, wobei die Komponenten abnehmbar oder kippbar/drehbar sind und die Antriebsmotore seitlich innen am Gehäuse eingebaut sind.

Nach der DE 85 34 640 U1 ist zusätzlich ein Kettenfahrzeug mit elektrischem Antrieb bekannt, wobei die Kette als Endlos-Rotorteil ausgebildet ist, das von mehreren Statorteilen umschlossen wird und diese linear durchläuft.

Auch aus der DE 31 46 661 A1 ist ein Kettenfahrzeug zu entnehmen, wobei eingesetzten Kettenumlenkrädern elektrische Antriebe zugeordnet sind.

Aufgabe der Erfindung ist es, eine gattungsgemäße Anordnung zu verbessern und dabei das Drehmoment einzelner Antriebseinheiten herabzusetzen sowie eine Redundanz der Antriebe zur Aufrechterhaltung der Einsatzfähigkeit zu gewährleisten und den festen, leicht austauschbaren Einbau zu ermöglichen.

Die Lösung dieser Aufgabe erfolgt erfindungsgemäß dadurch, daß die Antriebsräder in einen oberen Kettentrumm oberhalb der Gleiskette eingreifen, und daß Stützrollen unter der Gleiskette und den Antriebsrädern gegenüberliegend angeordnet sind.

Alternativ ist vorgesehen, daß die Antriebsräder in Form von Stützrollen unterhalb eines oberen Kettentrumms der Gleiskette eingreifen und daß Stützrollen als Andruckrollen oberhalb der Gleiskette und den Antriebsrädern gegenüberliegend angeordnet sind.

Hierdurch ist es möglich, den Antrieb außerhalb der federnden Massen des Laufwerks anzuordnen und eine Aufteilung der Antriebsleistung durchzuführen.

Eine vorteilhafte Ausbildung wird dadurch geschaffen, daß jede Gleiskette mindestens zwei Antriebseinheiten aus elektrischem Antriebsmotor, Getriebe, Antriebsrad und zugeordnetem Stützrad bzw. Andruckrolle aufweist.

Weiterhin wird vorgeschlagen, daß die Antriebseinheiten in einer Kettenschulter des Fahrzeugs oberhalb der Gleiskette und seiner Kettenabdeckung angeordnet sind. Alternativ hierzu ist vorgesehen, daß die Antriebseinheiten im Fahrzeugehäuse an der Gehäusewandung zum Kettentrumm angeordnet sind.

Um gute kinetische Verhältnisse zu schaffen, wird vorgeschlagen, daß zwischen elektrischem Antriebsmotor einschließlich einem Primärgetriebe und dem Antriebsrad ein weiteres Zusatzgetriebe angeordnet ist.

Zur feldtauglichen Handhabbarkeit wird vorgeschlagen, daß die Antriebseinheiten als austauschbare Module ausgebildet sind.

Zur Vergrößerung der Leistungsaufteilung ist vorgesehen, daß zu den Antriebseinheiten im oberen Kettentrumm zusätzlich mindestens ein Umlenkrad der Gleiskette mit einem elektrischen Antriebsmotor gekoppelt ist.

In der Zeichnung sind Ausführungsbeispiele der Erfindung schematisch dargestellt. Es zeigen:
- Fig. 1: eine Seitenansicht eines Kettenfahrzeuges,
- Fig. 2: eine Draufsicht auf eine Seite des Kettenfahrzeuges im Schnitt,
- Fig. 3: einen Vertikalschnitt mit einem Antrieb durch eine Seite des Kettenfahrzeuges **und**
- Fig. 4: eine Darstellung wie Fig. 3 mit einem alternativen Antriebskonzept.

Das dargestellte Kettenfahrzeug bestehend aus einem Fahrzeuggehäuse 1 mit Fahrzeugbug 13 und Fahrzeugheck 14 besitzt seitlich eine Kettenschulter 2, mit einem unterhalb angeordneten Laufwerk und Kettentrumm, aus einer Gleiskette 3, Laufrollen 4, Umlenkrädern 5 und 6 und Stützrollen 7. Die Laufrollen 4 sind dabei über Schwingarme 8 geführt und mit dem Fahrzeuggehäuse 1 verbunden.

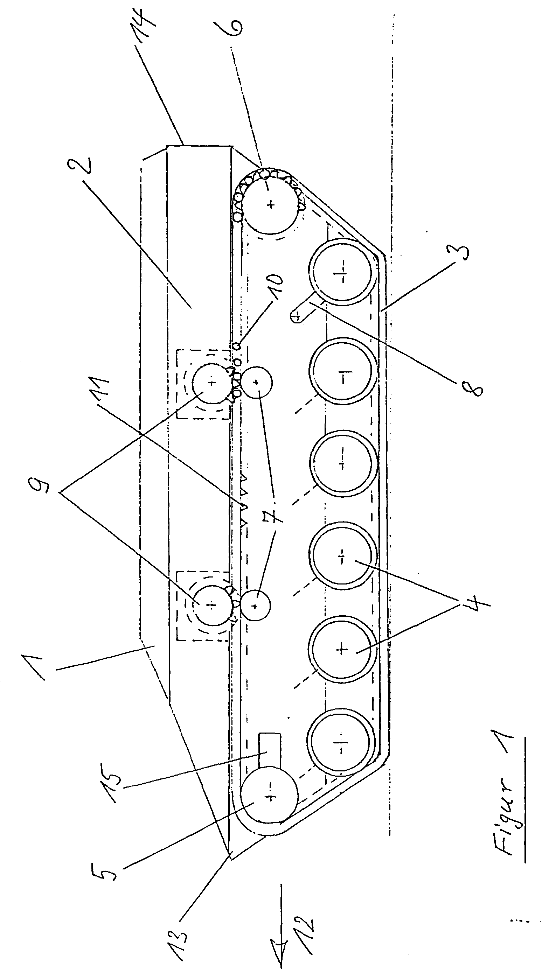

Eine Antriebseinheit 9 besteht aus einem elektrischen Antriebsmotor und einem nicht näher dargestellten Getriebe mit einem Antriebsrad 92, das gemäß Fig. 1 jeweils oberhalb der Stützrolle 7 in die Kettenschulter 2 eingebaut ist. Die Zähne des Antriebsrades 92 greifen zwischen die Kettenendverbinderbolzen 10 in die Gleiskette 3 ein, die aus Kettengliedern besteht und Kettenführungszähne 11 in der Mitte der Kettenbreite angeordnet sind. In dieser Ausführung sind zwei Antriebseinheiten 9 mit Stützrollen 7 auf einer Kettenseite angeordnet.

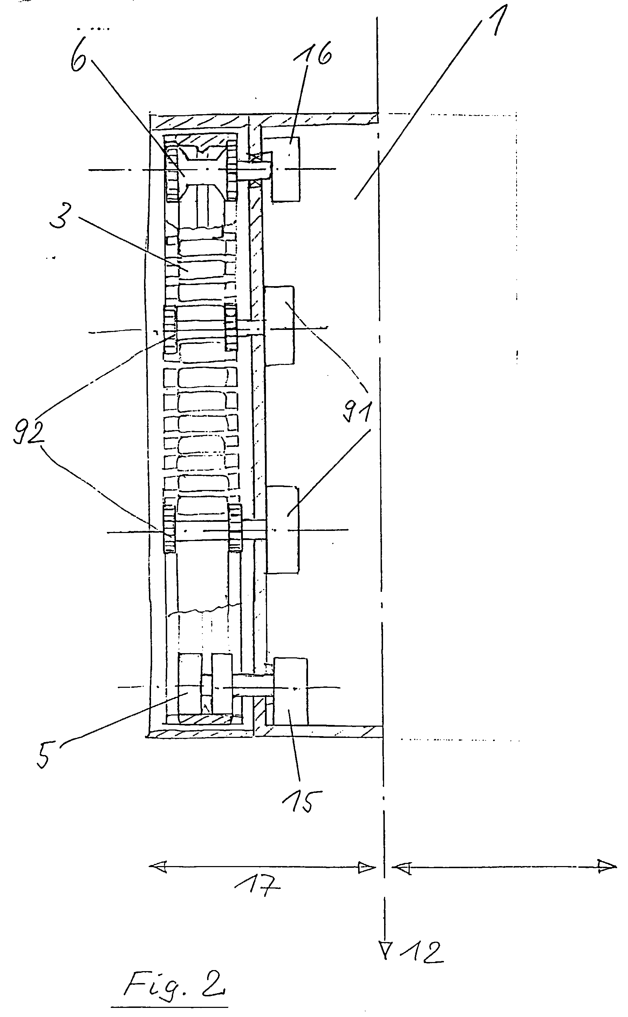

Gemäß Fig. 2 ist die in Fahrtrichtung 12 rechte Fahrzeugseite 17 dargestellt. Die Gleiskette 3 wird hierbei über das Umlenkrad 6, das mit Zähnen versehen ist, umgelenkt, wobei über die Zähe das Bremsmoment einer mechanischen Bremse 16 übertragen wird. Zwischen den Umlenkrädern 5,6 sind zwei Antriebsräder 92 im Abstand angeordnet, die von innenliegenden elektrischen Antriebseinheiten 91 angetrieben werden.

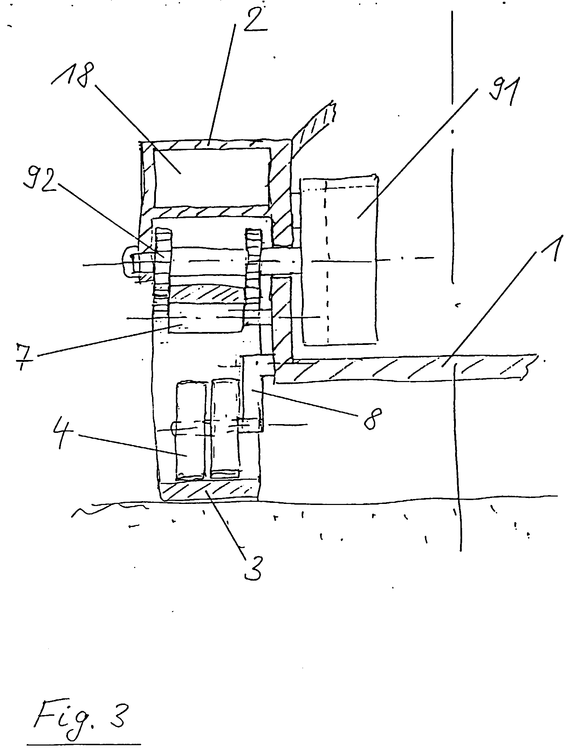

Der Aufbau gemäß Figur 3 zeigt die Laufrollen 4 mit der Gleiskette 3, wobei die Laufrollen 4 federnd mittels Schwingarme 8 am Fahrzeuggehäuse 1 gelagert sind. Über die Stützrollen 7 wird die Gleiskette 3 zurückgeführt. Oberhalb der Gleiskette 3 ist das Antriebsrad 92 in der Kettenschulter 2 fluchtend und in Eingriff mit der Gleiskette 3 gelagert und mit seiner Achse mit der elektrischen Antriebseinheit 91 einschließlich einem Primärgetriebe verbunden. In der Kettenschulter 2 ist es gegebenenfalls möglich, einen elektrische Leistungserzeuger 18 für die elektrische Antriebseinheit 91 unterzubringen.

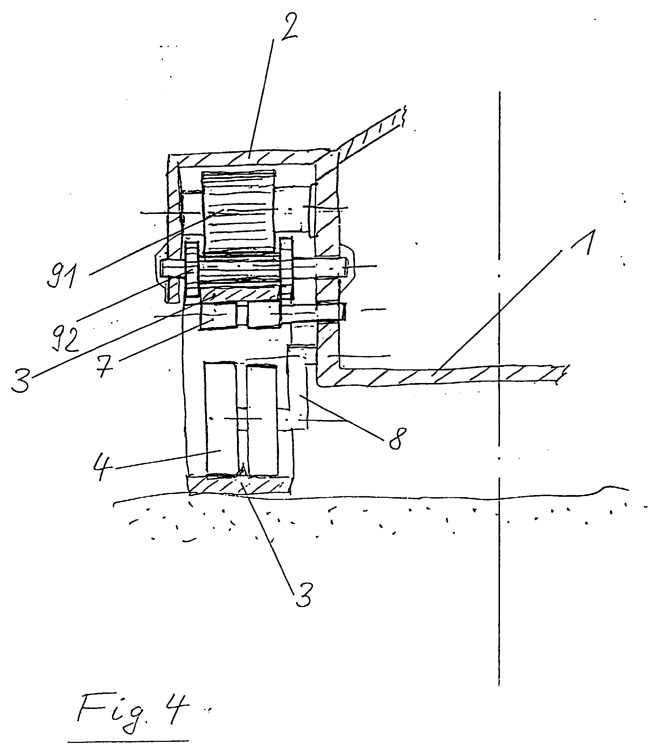

Eine alternative Anordnung ist in Fig. 4 dargestellt. Die elektrische Antriebseinheit ist oberhalb der Gleiskette 3 in der Kettenschulter 2 angeordnet. Es wird das Antriebsrad 92 angetrieben und kann mit einer Verzahnung an der elektrischen Antriebseinheit 91 zu einer Verzahnung an der Antriebsradachse des Antriebsrades 92 eine weitere Getriebestufe bilden.

## Patentansprüche

1. Fahrantrieb für militärische Kettenfahrzeuge mit einem elektrischen Antrieb, wobei der Antrieb eines Kettenlaufwerks aus Gleiskette mit Laufrollen, Umlenkräder und durch mehrere elektrische Antriebsmotore mit zugehörigen Antriebsrädern gebildet ist, dadurch gekennzeichnet, daß die Antriebsräder (92) in einen oberen Kettentrumm oberhalb der Gleiskette (3) eingreifen, und daß Stützrollen (7) unter der Gleiskette (3) und den Antriebsrädern (92) gegenüberliegend angeordnet sind.

2. Fahrantrieb für militärische Kettenfahrzeuge mit einem elektrischen Antrieb, wobei der Antrieb eines Kettenlaufwerks aus Gleiskette mit Laufrollen, Umlenkräder und durch mehrere elektrische Antriebsmotore mit zugehörigen Antriebsrädern gebildet ist, dadurch gekennzeichnet, daß die Antriebsräder (92) in Form von Stützrollen unterhalb eines oberen Kettentrumms der Gleiskette (3) eingreifen und daß Stützrollen (7) als Andruckrollen oberhalb der Gleiskette (3) und den Antriebsrädern (92) gegenüberliegend angeordnet sind.

3. Fahrantrieb nach Anspruch 1 oder 2, dadurch gekennzeichnet, daß jede Gleiskette (3) mindestens zwei Antriebseinheiten (91) aus elektrischem Antriebsmotor, Getriebe, Antriebsrad (92) und zugeordnetem Stützrad bzw. Andruckrolle (7) aufweist.

4. Fahrantrieb nach Anspruch 3, dadurch gekennzeichnet, daß die Antriebseinheiten (91) in einer Kettenschulter (2) des Fahrzeugs oberhalb der Gleiskette (3) und seiner Kettenabdeckung angeordnet sind.

5. Fahrantrieb nach einem der Ansprüche 1 bis 3, dadurch gekennzeichnet, daß die Antriebseinheiten (91) im Fahrzeugehäuse (1) an der Gehäusewandung zum Kettentrumm angeordnet sind.

6. Fahrantrieb nach einem der Ansprüche 1 bis 5, dadurch gekennzeichnet, daß zwischen elektrischem Antriebsmotor einschließlich einem Primärgetriebe und dem Antriebsrad (92) ein weiteres Zusatzgetriebe angeordnet ist.

7. Fahrantrieb nach einem der Ansprüche 1 bis 6, dadurch gekennzeichnet, daß die Antriebseinheiten (91) als austauschbare Module ausgebildet sind.

8. Fahrantrieb nach einem der Ansprüche 1 bis 7, dadurch gekennzeichnet, daß zu den Antriebseinheiten (91) im oberen Kettentrumm zusätzlich mindestens ein Umlenkrad (5,6) der Gleiskette (3) mit einem elektrischen Antriebsmotor gekoppelt ist.
